# EUROPEAN PATENT SPECIFICATION

(11) **EP 2 756 830 B1**
(45) Date of publication and mention of the grant of the patent: **02.09.2015**
(21) Application number: 13152032.2
(22) Date of filing: 21.01.2013
(51) Int. Cl.: A61F 13/00, C09J 153/00, C09J 153/02

(54) **Hot melt adhesive compositions for adherence to skin or similar**
Schmelzkleberzusammensetzungen zur Anhaftung an Haut oder ähnlichem
Compositions adhésives thermofusibles adhérant à la peau ou analogue

(43) Date of publication of application: 23.07.2014
(73) Proprietor: ADHEX TECHNOLOGIES, 21300 Chenôve (FR)
(72) Inventor: Williams, Maud, 21000 DIJON (FR); Metral, Olivier, 39000 LONS LE SAUNIER (FR); Guillemet, Alain, 21121 FONTAINE LES DIJON (FR)
(74) Representative: GLN SA

(56) References cited:
- WO-A1-99/19417
- US-A- 5 912 295

## Description

### FIELD OF THE INVENTION

The invention relates to a hot melt adhesive composition intended to adhesively adhere to skin without irritation of the skin. The hot melt adhesive composition according to the invention will find wide application and is more particularly intended to be used in articles such as plasters, bandages, tapes, wound dressings and similar which are adhesively adhered to skin.

### DESCRIPTION OF PRIOR ART

It is well known to use hot melt adhesives for bonding a variety of materials to many substrates. Such pressure sensitive hot melt adhesive is disclosed in the US patent N° 5,204,390. Said pressure-sensitive hot melt adhesive comprises substantially saturated block copolymer, tackifying resin, and polybutene. This hot melt composition exhibits adhesive stability when exposed to ultre-violet light and is stable when contacted with plasticized surfaces.

Moreover, US patent N° 4,136,699 discloses a hot melt pressure-sensitiveadhesive intended to be used in articles such as plasters, bandages, tapes, or feminine napkins wherein a positioning adhesive composition is necessary. The feminine napkins comprises an adhesive which is useful for removably attaching the article to the inside of an undergarment or the like. The rubbery base for the hot-melt pressure-sensitve adhesive is an A-B-A block copolymer having polystyrene end blocks and a rubbery poly(ethylene-butylene) midblock. According to another embodiment, The rubbery base for the hot-melt pressure-sensitve adhesive is a radial teleblock copolymer with branches having polystyrene terminal blocks and a butadiene segment in the center. One or both of these rubbery polymers is used to formulate the hot-melt pressure-sensitive adhesive along with a suitable tackifier and a plasticizer.

During manufacture of such articles, the hot melt pressure-sensitive adhesive is typically slot-coated directly or transfer coated onto a polyolefin film substrate and then covered with a release liner. In recent years, manufacturers have attempted to replace the continuous sloat-coat method with spray application methods, such as spiral spray and melt blown techniques, or with pattern coating methods, otherwise referred to as screenprinting. Said pattern coating methods have the advantages of reducing adhesive consumption, since the surface area per mass of adhesive is greatly increased, and of allowing to place adhesive in precise locations.

Nevertheless, the hot melt adhesives of prior art have the drawback that they cause skin irritation when in contact with skin for a period of time.

To overcome this drawback, the addition of zinc oxide is usually introduced in the composition of the hot melt adhesives.

Nevertheless, articles constructed from these hot melt pressure-sensitive adhesives often do not adhere properly to skin and thus can easily shift and become unattached.

Hot melt pressure-sensitive adhesive composition wherein the adhesive is permattently adhered to a substrate and is removably attachable to skin in order to secure an article for a period of time and can be subsequently removed without causing skin irritation or adhesive transfer had been already conceived.

This is particularly the case of the european patent EP 0 991 730 wherein a hot melt adhesive composition is disclosed. Said hot melt adhesive composition comprises a block copolymer, a tackifying resin, an extending agent and optionnaly additives, wherein all the ingredients employed are substantially saturated. The term « saturated » means that the ingredient is substantially free of double bonds which are easily susceptible to oxidation and « substantially saturated » refers to substantially hydrogenated. The block copolymer has styrenic end block(s) and a midblock comprising ethylene/butylene, ethylene propylene, and mixtures thereof. Most prefered block coploymers have a solution viscosity of at least 50cPs or greater, more preferably about 100 cPs, and most preferably about 200 cPs up to about 200 for a 25 wt-% solution of the polymer in toluene at 25°C and a diblock content of greater than about 35 wt-%, more preferably greater than about 50 wt-%, and most preferably ranging from about 70 wt-% to about 100 wt-% diblock.

The hot melt adhesive composition comprises :
a) 15 to 40wt-%, more preferably 15 to 35 wt-% and most preferably 20 to 30 wt-% of a substantially saturated block copolymer ;
b) 30 to 80 wt-%, preferably 35 to 65 wt-%, more preferably 40 to 60 wt-%, and most preferably 40 to 45 wt-% of at least one substantially saturated tackifying resin ;
c) 5 to 55 wt-%, preferably 13 to 35 wt-%, and more preferably 20 to 30 wt-% of at least one substantially saturated plasticizer ; and
d) 0 to 50 wt-%, preferably 0.1 to 10 wt-% and more preferably 0.1 to 5.0 wt-% of additive(s), wherein said adhesive composition has a viscosity ranging from 500 to 12000 mPas at 175°C.

The Brookfield viscosity was determined with Brookfield models DVH, DV-II or DV-III. An appropriate spindle size and hot melt adhesive sample size was selected in accordance with the viscometer manufacturers instructions. The adhesive sample was melted in the thermocel at the temperature at which the viscosity was to be measured. The spindle was lowered into the melted adhesive sample. The motor was turned on at the lowest speed and the corresponding torque reading displayed. The speed was increased until the torque reading stabilized and the viscosity measurement recorded after 30 minutes.

It should be noted that the accuracy of measurement of the viscosity is particularly low since measurement had been made far away from the maximum scale. Indeed, the spindle and rotational speed for use with the Brookfield viscometer had not been chosen in such a way that the dial or digital display reading was between 10% and 100% torque, the recommanded measurable viscosity being equal to 10% of the lowest full scale range of each viscosimeter. In EP 0 991 730, said measurement was not made with appropriate spindle and rotational speed according to the specification of Brookfield Rheometers.

Moreover, according to this prior art, at a viscosity of less than 500 mPa.s the adhesive transfers when removed. Nevertheless, more the viscosity is low more the adhesive is easily processed, particularly in the case of discontinuous application methods such as pattern-coating.

To overcome above-mentioned limitation, a need exists for a hot melt pressure-sensitive adhesive composition wherein the adhesive is easily processed whatever the coating method, the adhesive is permanently adhered to a substrate and is removably attachable to skin in order to secure an article for a period of time and can be subsequently removed without causing skin irritation or adhesive transfer.

### SUMMARY OF THE INVENTION

It is therefore an object of the invention to provide a hot melt pressure-sensitive adhesive composition having a moderate cost and wherein said adhesive is easily processed, is permanently adhered to a substrate and is removably attachable to skin in order to secure an article for a period of time and can be subsequently removed without causing skin irritation or adhesive transfer.

For this purpose, it is proposed a hot melt sensitive pressure adhesive composition useful for adherence to skin comprising at least 1 to 30 weight-% of a first triblock copolymer, 1 to 30 weight-% of a second triblock copolymer, 20 to 90 weight-% of at least one tackifying resin, 15 to 80 weight-% of at least one plasticizer, wherein the viscosity of said adhesive composition is less than 500 mPas at 175°C.

Such composition is easily processed, is permanently adhered to a substrate and is removably attachable to skin in order to secure an article for a period of time and can be subsequently removed without causing skin irritation or adhesive transfer.

The viscosity of said adhesive composition is less than 480 mPas at 175°C and preferably less than 390 mPas at 175°C.

Preferably, the melting point of the tackifying resin is less or equal to 100°C.

Moreover, the first triblock copolymer is a clear linear triblock copolymer based on styrene and ethylene/butylene, and preferably a Styrene Ethylene Butylene Styrene SEBS elastomer.

The second triblock copolymer is a clear copolymer based on styrene and ethylene/propylene, and preferably a Styrene Ethylene Propylene Styrene (SEPS) elastomer.

Furthermore, the tackifying resin is a low molecular weight fully hydrogenated thermoplastic resin and the plasticizer is a non stabilised, aromatic-free paraffinic or naphthenic mineral oil.

Secondarily, the hot melt sensitive pressure adhesive composition according to the invention further comprises 0,1 to 5 weight-% of at least one antioxidant.

Said antioxidant is selected from the group consisting of Phosphite antioxidant, Phosphonite antioxidant, Thioethers antioxidant, phenolic antioxidant or mixtures thereof.

Another object of the invention concerns an article comprising a substrate coated with the hot melt sensitive pressure adhesive composition according to the invention.

The total mass of adhesive ranges about 5g/m2 to 500g/m2.

A last object of the invention concerns a use of a hot melt sensitive pressure adhesive composition according to the invention for adherence to skin.

### DETAILED DESCRIPTION

The hot melt sensitive pressure adhesive composition useful for adherence to skin according to the invention comprises at least :
i) 1 to 30 weight-% of a first triblock copolymer,
ii) 1 to 30 weight-% of a second triblock copolymer,
iii) 20 to 90 weight-% of at least one tackifying resin,
iv) 15 to 80 weight-% of at least one plasticizer,
wherein the viscosity of said adhesive composition is less than 500 mPas at 175°C.

The applicant summise that the use of two tribloc copolymers with a viscosity of the adhesive composition contributes to the lack of skin irritation.Furthermore, the use of two tribloc copolymer also results in excellent melt stability and ultra-violet light stability. Surprisingly, at a viscosity of less than 500 mPa.s the adhesive does not transfer when removed. Moreover the hot melt adhesive composition according to the present invention possesses a very low viscosity to hot melt adhesive composition of priot art and, consequently, is easily processed whatever the coating method

The hot melt adhesive composition of the present invention comprises at least a first triblock copolymer present in amount ranging from 1 to 30 weight-%, more preferably from about 3 to 20 weight-% and most preferably from about 5 to 15 weight-%.

The prefered first triblock copolymer is a clear linear triblock copolymer based on styrene and ethylene/butylene and more preferably a Styrene Ethylene Butylene Styrene SEBS elastomer. Such polymers are commercially available from Kraton under the tradename Kraton®. A tribloc copolymer describes a block copolymer having three distinct blocks. Commercially available tribloc copolymer useful for the invention includes KRATON (R) G1650 Polymer, a 29% styrene, 8000 solution viscosity (25 wt-% polymer), 100% triblock styrene-ethylene/butylene-styrene (S-EB-S) block copolymer.

The hot melt adhesive composition of the present invention comprises at least a second triblock copolymer present in amount ranging from 1 to 30 weight-%, more preferably from about 3 to 20 weight-% and most preferably from about 5 to 15 weight-%.

The prefered second triblock copolymer is a clear copolymer based on styrene and ethylene/propylene and more preferably a Styrene Ethylene Propylene Styrene (SEPS) elastomer. Such polymers are commercially available from shell Chemical company under the tradename Kraton (R). Commercially available tribloc copolymer useful for the invention includes KRATON (R) G1730 Polymer, a 21% polystyrene, 100% triblock Styrene Ethylene Propylene Styrene (SEPS) block copolymer.

The adhesive composition of the present invention comprises at least one tackifying resin present in an amount ranging from 20 to 90 weight-%, preferably from about 30 to 80 weight-% , more preferably from about 40 to 70 weight-% and most preferably from about 50 to 60 weight-%. The tackifying resin useful to the present invention is a low molecular weight fully hydrogenated thermoplastic resin having, preferably, a melting point less or equal to 100°C. Commercially available tackifying resin suitable for use in the present invention includes Regalite (R) R1100 from Eastman.

The hot melt adhesive composition of the present invention comprises at least one plasticizer present in an amount ranging from15 to 80 weight-%, preferably from about 20 to 50 weight-% and more preferably from about 25 to 35 weight-%. Preferably, the plasticizer is a non stabilised, aromatic-free paraffinic or naphthenic mineral oil. Such oils are commecially available under the trademark ONDINA® of the Shell Company, such as Shell Ondina 919 for example.

Optionnaly, the hot melt sensitive pressure adhesive composition of the present invention further comprises at least one additive. Preferably, said additive is at least one anti-oxidant. Said anti-oxidant is present in an amount ranging from about 0,1 to 5 weight-% and more preferably from 0,3 to 1 weight-%.The antioxidant is selected from the group consisting of Phosphite antioxidant, Phosphonite antioxidant, Thioethers antioxidant, phenolic antioxidant or mixtures thereof. Commercially available antioxidants suitable for use in the present invention include ALVINOX P and/or IRGANOX (R) 1010 from Ciba (R).

Said additive can consist in an inorganic filling agent, pigments, ultraviolet or other light protecting agents, and the like without departing from the scope of the invention.

Further, various medicinal components may be added for trans-dermal drug delivery applications. As is known in the art, various other components can be added to modify the tack, colour, odour, etc. of a hot melt adhesive. It is generally preferred that the other components or ingredients should be relatively inert and have negligible effects on the properties contributed by the other component of the adhesive composition.

Techniques for manufacturing articles comprising the hot melt adhesive of the present invention include continuous coating methods, such as slot-coating as well as various discontinuous methods, particularly spray application methods, such as spiral spray and melt-blown techniques, and by pattern coating methods, otherwise referred to as screenprinting. The hot melt adhesive composition of the present invention is particularly preferred for pattern coating which involves extruding the molten adhesive through a rotating screen which in turn deposits the adhesive directly onto the substrate to be coated. Alternatively, the hot melt adhesive composition may be first deposited onto release paper and then transfer coated onto the intended substrate. The total mass of adhesive per area ranges from about 5 g/m2 to about 500 g/m2. However, lower or higher amounts may be useful for some applications to alter the level of adhesion.

The hot melt adhesive composition according to the present invention possesses a low viscosity in comparison to hot melt adhesive compositions commonly employed for slot-coating applications. The adhesive of the present invention exhibits a viscosity of less than 500 mPa. s at 175 C, preferably less than 480 mPas at 175°C and preferably less than 390 mPas at 175°C.

Articles whereon at least one substrate is continuously or discontinuously coated with the hot melt adhesive composition of the present invention include plasters, bandages, feminine napkins, adult incontinent pads, diapers, tapes, medical devices such as eye patches, medicinal patches and electrode patches, and the like. The substrate is typically a plastic film, nonwoven, or textile material. The articles according to the present invention are particularly useful for plasters, gauze and bandages for medical purposes.

The present invention can also be exemplified by the following non-limiting examples. The present invention is not restricted or limited in scope by the exemplified hot melt adhesive composition nor articles constructed therefrom or the process of making such articles, but rather can be advantageously used for all removable hot melt adhesive applications.

### Examples

### Test Methods

### Brookfield Viscosity

The Brookfield Viscosity was determined with Brookfield models DVH, DV-II or DV-111. An appropriate spindle size and hot melt adhesive sample size was selected in accordance with the viscometer manufacturers instructions as depicted hereinafter.

| SPINDLE | VISCOSITY RANGE-Centipoise(mPa*s) | | | | SHEAR RATE (sec⁻¹) | SAMPLE VOLUME (mL) |
|---|---|---|---|---|---|---|
| LVSERIES VISOOSIMETERS | | | | | | |
| | LVT | LVCV&LVCV++ | LVCVI+* | LVDV- ULTRA | | |
| SC4-18 | 5-10,000 | 3-10,000 | 15-30,000 | 12-30,000 | 132N** | 8.0 |
| SC4-31 | 50-100,000 | 30-100,000 | 15-300,000 | 12-300,000 | 0.34N | 10.0 |
| SC4-34 | 300-200,000 | 60-200,000 | 30-600,000 | 24-600,000 | 0.28N | 95 |

| RV SERIES VISCOSIMETERS | | | | | | |
|---|---|---|---|---|---|---|
| | RVT | RVDV-E&RVDV++ | RVDV* | RVDV- ULTRA | | |
| SC4-21 | 50-100,000 | 50-170,000 | 25-500,000 | 20-500,000 | 0.98N** | 8.0 |
| SC-27 | 250-500,000 | 250-830,000 | 125-2,500,000 | 100-2,500,000 | 0.34N | 10.5 |
| SC4-28 | 500-1,000,000 | 500-1,700,000 | 250-5,000,000 | 200-5,000n000 | 0.28N | 11.5 |
| SC4-29 | 1,000-2,000,000 | 1,000-3,300,000 | 500-10,000,000 | 400-10,000,000 | 0.25N | 13.0 |

| HA SERIES VISCOSIMETERS | | | | | | |
|---|---|---|---|---|---|---|
| | HAT | HADV-E&HADV | HADV* | HADV- ULTRA | | |
| SC4-21 | 100-200,000 | 100-300,000 | 50-1,000,000 | 40-1,000,000 | 0.98N** | 8.0 |
| SC4-27 | 500-1,000,000 | 500-1,700,000 | 250-5,000,000 | 200-5,000,000 | 0.34N | 10.5 |
| SCA-28 | 1,000-2,000,000 | 1,000-3,300,000 | 500-10,000,000 | 400-10,000,000 | 0.28N | 11.5 |
| SC4-29 | 2,000-4,000,000 | 2,000-6,700,000 | 1,000-20,000,0000 | 800-20,000,000 | 0.25N | 13.0 |

| HB SERIES VISCOSIMETERS | | | | | | |
|---|---|---|---|---|---|---|
| | HBT | HBDV-E&HBDV | HBDV* | HBDV-ULTRA | | |
| SC4-21 | 400-800,000 | 400-1,300,000 | 200-4,000,000 | 160-4,000,000 | 0.98N** | 8.0 |
| SC4-27 | 2,000-4,000,000 | 2,000-6,700,000 | 1,000-20,000,0000 | 800-20,000,000 | 0.34N | 10.5 |
| SC4-28 | 4,000-8,000,000 | 4,000-13,300,000 | 2,000-40,000,000 | 1,600-40,000,000 | 0.28N | 115 |
| SC4-29 | 8,000-16,000,000 | 8,000-26,700,000 | 4,000-80,000,000 | 3,200-80,000,0000 | 0.25N | 13.0 |

More particularly, the spindle and rotational speed for use with the Brookfield viscometer is chosen in such a way that the dial or digital display reading is between 10% and 100% torque, the recommanded measurable viscosity being equal to 10% of the lowest full scale range of each viscosimeter.

| SPEED (RPM) | LV SERIES VISCOSIMETERS | | | 5 x LV SERIES VISCOSIMETERS | | |
|---|---|---|---|---|---|---|
| | SPINDLE NUMBER | | | SPINDLE NUMBER | | |
| | 18 | 31 | 34 | 18 | 31 | 34 |
| 60 | 0.5 | 5 | 10 | 2.5 | 25 | 50 |
| 30 | 1 | 10 | 20 | 5 | 50 | 100 |
| 12 | 2.5 | 25 | 50 | 12.5 | 125 | 250 |
| 6 | 5 | 50 | 100 | 25 | 250 | 500 |
| 3 | 10 | 100 | 200 | 50 | 500 | 1M |
| 1.5 | 20 | 200 | 400 | 100 | 1M | 2M |
| 0.6 | 50 | 500 | 1M | 250 | 2.5M | 5M |
| 0.3 | 100 | 1M | 2M | 500 | 5M | 10M |

| SPEED (RPM) | RV SERIES VISCOSIMETERS | | | |
|---|---|---|---|---|
| | SPINDLE NUMBER | | | |
| | 21 | 27 | 28 | 29 |
| 100 | 5 | 25 | 50 | 100 |
| 50 | 10 | 50 | 100 | 200 |
| 20 | 25 | 125 | 250 | 500 |
| 10 | 50 | 250 | 500 | 1M |
| 5 | 100 | 500 | 1M | 2M |
| 4 | 125 | 625 | 1.25M | 2.5M |
| 2.5 | 200 | 1M | 2M | 4M |
| 2 | 250 | 1.25M | 2.5M | 5M |
| 1 | 500 | 2.5M | 5M | 10M |
| 0.5 | 1M | 5M | 10M | 20M |

| SPEED (RPM) | HA SERIES VISCOSIMETERS | | | |
|---|---|---|---|---|
| | SPINDLE NUMBER | | | |
| | 21 | 27 | 28 | 29 |
| 100 | 10 | 50 | 100 | 200 |
| 50 | 20 | 100 | 200 | 400 |
| 20 | 50 | 250 | 500 | 1M |
| 10 | 100 | 500 | 1M | 2M |
| 5 | 200 | 1M | 2M | 4M |
| 2.5 | 400 | 2M | 4M | 8M |
| 2 | 500 | 2.5M | 5M | 10M |
| 1 | 1M | 5M | 10M | 20M |
| 0.5 | 2M | 10M | 20M | 40M |

| SPEED (RPM) | HB SERIES VISCOSIMETERS | | | |
|---|---|---|---|---|
| | SPINDLE NUMBER | | | |
| | 21 | 27 | 28 | 29 |
| 100 | 40 | 200 | 400 | 800 |
| 50 | 80 | 400 | 800 | 1.6M |
| 20 | 200 | 1M | 2M | 4M |
| 10 | 400 | 2M | 4M | 8M |
| 5 | 800 | 4M | 8M | 16M |
| 2.5 | 1.6M | 8M | 16M | 32M |
| 2 | 2M | 10M | 20M | 40M |
| 1 | 4M | 20M | 40M | 80M |
| 0.5 | 8M | 40M | 80M | 160M |

The adhesive sample was melted in the thermocel at the temperature at which the viscosity was to be measured. The spindle was lowered into the melted adhesive sample. The motor was turned on at the lowest speed and the corresponding torque reading displayed. The speed was increased until the torque reading stabilized and the viscosity measurement recorded after 30 minutes.

### Peels to a Textile Material

The 180 Peels to a Textile Material was determined by first preparing hot melt coated adhesive films on Mylar or polyolefin film using a suitable coating device at an appropriate application temperature. During preparation of the adhesive film, the adhesive surface is covered with release paper to facilitate handling.

The coat weight is checked targeting the indicated coat weight or 40 g/m'+/-3 g/m2 where not indicated otherwise. The adhesive coated films are cut into 25 mm wide strips which are 170 mm in length in the machine direction. Remove the release paper and place the adhesive surface of one 1 inch (2.5 cm) wide strip onto the textile* material to form a composite. Place the composite on the mechanical roll-down device (2250 g at 120 inches/min), and allow the roller two passes over the sample, one forward and one back. Cut the strips in the middle to obtain two samples. The strip is placed into the mobile jaw and the fabric is placed in the stationary jaw. The procedure is repeated three times (six samples), recording the average T-peel value and noting any legging or transfer. The T-peel values are reported in grams per linear inch. It is preferred to have T-peels in the 100-500 g range, most preferred in the 200-500 g range without adhesive transfer.

### Peel adhesion to skin

A similar procedure was employed to measure the peel adhesion to skin with the exception that the adhesive coated strips were contacted to the inside forearm of the inventor and had a roller used to apply pressure.

### Skin irritation

To determine skin irritation an adhesive coated strip from each example was contacted to the forearm of an individual known to have very sensitive skin.

After 3 days no irritation was noted.

### Example 1

Brookfield viscometer chosen : RVT model
Thermostat: Model 74R
Spindle number : 27

| Ingredient | Tradename | weight-% |
|---|---|---|
| SEBS tribloc copolymer | KRATON G1650E | 10 |
| SEPS tribloc copolymer | KRATON G1730 | 4,4 |
| Tackifying resin | REGALITE R1100 | 55 |
| Plasticizer | ONDINA 919 | 30 |
| Antioxidant | A1LVINOX P | 0,27 |
| Antioxidant | IRGANOX 1010 | 0,27 |

### Example 2

Brookfield viscometer chosen : RVT model
Thermostat: Model 74R
Spindle number : 27

| Ingredient | Tradename | weight-% |
|---|---|---|
| SEBS tribloc copolymer | KRATON G1650E | 9 |
| SEPS tribloc copolymer | KRATON G1730 | 6 |
| Tackifying resin | REGALITE R1100 | 53 |
| Plasticizer | ONDINA 919 | 31 |
| Antioxidant | A1LVINOX P | 0,28 |
| Antioxidant | IRGANOX 1010 | 0,28 |

### Example 3

Brookfield viscometer chosen : RVT model
Thermostat: Model 74R
Spindle number : 27

| Ingredient | Tradename | weight-% |
|---|---|---|
| SEBS tribloc copolymer | KRATON G1650E | 10 |
| SEPS tribloc copolymer | KRATON G1730 | 6,5 |
| Tackifying resin | REGALITE R1100 | 49 |
| Plasticizer | ONDINA 919 | 34 |
| Antioxidant | A1LVINOX P | 0,3 |
| Antioxidant | IRGANOX 1010 | 0,3 |

### Examples 1 to 3 were made in a vertical mixer using known hot melt adhesive blending techniques

The viscosity of example 1 is as follows :

| **Vitesse Température** | **0,5** | **1** | **2.5** | **5** | **10** | **20** | **50** | **100** |
|---|---|---|---|---|---|---|---|---|
| **90** | 22500 | 20000 | 19000 | 18000 | 17750 | | | |
| **100** | 12500 | 10000 | 9000 | 8500 | 8500 | 8250 | | |
| **110** | 7500 | 6250 | 5500 | 4250 | 4000 | 4250 | | |
| **120** | 5000 | 3750 | 3500 | 3000 | 2500 | 2625 | | |
| **130** | 2500 | 2500 | 2000 | 1750 | 1635 | 1625 | | |
| **175** | | | | | 500 | 440 | 375 | 375 |

The viscosity of example 2 is as follows :

| **Vitesse Température** | **0,5** | **1** | **2.5** | **5** | **10** | **20** | **50** | **100** |
|---|---|---|---|---|---|---|---|---|
| **120** | | | 2000 | 2500 | 2625 | 2625 | 2575 | |
| **130** | | | | 1500 | 1625 | 1625 | 1650 | 1625 |
| **140** | | | | | | 1062,5 | 1150 | 1062,5 |
| **150** | | | | | | | 900 | 875 |
| **160** | | | | | | | 625 | 550 |
| **170** | | | | | | | 500 | 475 |
| **175** | | | | | | | 425 | 412,5 |

### Preparation of Coated Articles

The mixture of the components, as described in each of the Examples 1 to 3 were melted at 150 C to 160 C in a standard melting apparatus and extruded through an extrusion nozzle or through a screen directly onto the intended substrate of the article constructed therefrom. Alternatively, the melted hot melt composition is first extruded onto release paper and then transfer coated onto the intended surface of the article constructed therefrom, such as plasters, gauze and bandages for medical purposes.

### Preparation of Coated Samples

The components were melted in a melting apparatus and then full-coated onto the textile. The adhesion of the coated textile against steel and skin was measured.

## Claims

1. A hot melt sensitive pressure adhesive composition useful for adherence to skin ***characterized* in that** it comprises at least :
i) 1 to 30 weight-% of a first triblock copolymer,
ii) 1 to 30 weight-% of a second triblock copolymer,
iii) 20 to 90 weight-% of at least one tackifying resin,
iv) 15 to 80 weight-% of at least one plasticizer,
Wherein the viscosity of said adhesive composition is less than 500 mPas at 175°C

2. The hot melt sensitive pressure adhesive composition according to claim 1 ***characterized* in that** the viscosity of said adhesive composition is less than 480 mPas at 175°C and preferably less than 390 mPas at 175°C.

3. The hot melt sensitive pressure adhesive composition according to any claim 1 or 2 ***characterized* in that** the melting point of the tackifying resin is less or equal to 100°C.

4. The hot melt sensitive pressure adhesive composition according to any claim 1 or 3 ***characterized* in that** the first triblock copolymer is a clear linear triblock copolymer based on styrene and ethylene/butylene.

5. The hot melt sensitive pressure adhesive composition according to claim 4 ***characterized* in that** the first triblock copolymer is a Styrene Ethylene Butylene Styrene SEBS elastomer.

6. The hot melt sensitive pressure adhesive composition accordinf to any claim 1 to 5 ***characterized* in that** the second triblock copolymer is a clear copolymer based on styrene and ethylene/propylene.

7. The hot melt sensitive pressure adhesive composition according to claim 6 ***characterized* in that** the second triblock copolymer is a Styrene Ethylene Propylene Styrene (SEPS) elastomer.

8. The hot melt sensitive pressure adhesive composition according to any claim 1 to 7 ***characterized* in that** the tackifying resin is a low molecular weight fully hydrogenated thermoplastic resin.

9. The hot melt sensitive pressure adhesive composition according to any claim 1 to 8 ***characterized* in that** the plasticizer is a non stabilised, aromatic-free paraffinic or naphthenic mineral oil.

10. The hot melt sensitive pressure adhesive composition according to any claim 1 to 9 ***characterized* in that** it further comprises 0,1 to 5 weight-% of at least one antioxidant.

11. The hot melt sensitive pressure adhesive composition according to claim 10 ***characterized* in that** the antioxidant is selected from the group consisting of Phosphite antioxidant, Phosphonite antioxidant, Thioethers antioxidant, phenolic antioxidant or mixtures thereof.

12. An article comprising a substrate coated with the hot melt sensitive pressure adhesive composition according to claims 1 to 11.

13. The article according to claim 12 ***characterized* in that** the total mass of adhesive ranges about 5g/m² to 500g/m².

14. Use of a hot melt sensitive pressure adhesive composition according to claims 1 to 11 for adherence to skin.

## Patentansprüche

1. Schmelzhaftkleberzusammensetzung, die sich für das Anhaften auf Haut eignet, **dadurch gekennzeichnet, dass** sie zumindest umfasst:
i) 1 bis 30 Gew.-% eines ersten Triblockcopolymers,
ii) 1 bis 30 Gew.-% eines zweiten Triblockcompolymers,
iii) 20 bis 90 Gew.-% zumindest eines Klebeharzes;
iv) 15 bis 80 Gew.-% zumindest eines Weichmachers,
wobei die Viskosität der Kleberzusammensetzung bei 175 °C weniger als 500 mPas beträgt.

2. Schmelzhaftkleberzusammensetzung nach Anspruch 1, **dadurch gekennzeichnet, dass** die Viskosität der Kleberzusammensetzung bei 175 °C weniger als 480 mPas und vorzugsweise bei 175 °C weniger als 390 mPas beträgt.

3. Schmelzhaftkleberzusammensetzung nach einem der Ansprüche 1 oder 2, **dadurch gekennzeichnet, dass** der Schmelzpunkt des Kleberharzes kleiner gleich 100 °C beträgt.

4. Schmelzhaftkleberzusammensetzung nach einem der Ansprüche 1 oder 3, **dadurch gekennzeichnet, dass** das erste Triblockcopolymer ein klares lineares Triblockcopolymer auf Basis von Styrol und Ethylen/Butylen ist.

5. Schmelzhaftkleberzusammensetzung nach Anspruch 4, **dadurch gekennzeichnet, dass** das erste Triblockcopolymer ein Styrolethylenbutylenstyrol-SEBS-Elastomer ist.

6. Schmelzhaftkleberzusammensetzung nach einem der Ansprüche 1 bis 5, **dadurch gekennzeichnet, dass** das zweite Triblockcopolymer ein klares Copolymer auf Basis von Styrol und Ethylen/Propylen ist.

7. Schmelzhaftkleberzusammensetzung nach Anspruch 6, **dadurch gekennzeichnet, dass** das zweite Triblockcopolymer ein Styrolethylenpropylenstyrol-(SEPS-)Elastomer ist.

8. Schmelzhaftkleberzusammensetzung nach einem der Ansprüche 1 bis 7, **dadurch gekennzeichnet, dass** das Kleberharz ein vollständig hydriertes thermoplastisches Harz mit geringem Molekulargewicht ist.

9. Schmelzhaftkleberzusammensetzung nach einem der Ansprüche 1 bis 8, **dadurch gekennzeichnet, dass** der Weichmacher ein nicht-stabilisiertes aromastofffreies Paraffin- oder Naphthenmineralöl ist.

10. Schmelzhaftkleberzusammensetzung nach einem der Ansprüche 1 bis 9, **dadurch gekennzeichnet, dass** sie ferner 0,1 bis 5 Gew.-% zumindest eines Oxidationsmittels umfasst.

11. Schmelzhaftkleberzusammensetzung nach Anspruch 10, **dadurch gekennzeichnet, dass** das Antioxidationsmittel aus der Gruppe ausgewählt ist, bestehend aus Phosphitantioxidationsmittel, Phosphonitantioxidationsmittel, Thioesterantioxidationsmittel, Phenolantioxidationsmittel oder Mischungen davon.

12. Gegenstand, der ein Substrat umfasst, das mit der Schmelzhaftkleberzusammensetzung nach den Ansprüchen 1 bis 11 beschichtet ist.

13. Artikel nach Anspruch 12, **dadurch gekennzeichnet, dass** die Gesamtmasse der Kleber im Bereich von ungefähr 5 g/m² bis 500 g/m² liegt.

14. Verwendung einer Schmelzhaftkleberzusammensetzung nach den Ansprüchen 1 bis 11 für die Anhaftung auf Haut.

## Revendications

1. Composition adhésive thermofusible sensible à la pression efficace pour une adhésion sur la peau **caractérisée en ce qu'**elle comprend au moins :
i) 1 à 30 % en poids d'un premier copolymère tribloc,
ii) 1 à 30 % en poids d'un deuxième copolymère tribloc,
iii) 20 à 90 % en poids d'au moins une résine tackifiante,
iv) 15 à 80 % en poids d'au moins un plastifiant,
dans laquelle la viscosité de ladite composition adhésive est inférieure à 500 mPas à 175 °C.

2. Composition adhésive thermofusible sensible à la pression selon la revendication 1 **caractérisée en ce que** la viscosité de ladite composition adhésive est inférieure à 480 mPas à 175 °C et de préférence inférieure à 390 mPas à 175 °C.

3. Composition adhésive thermofusible sensible à la pression selon l'une quelconque des revendications 1 ou 2 **caractérisée en ce que** le point de fusion de la résine tackifiante est inférieur ou égal à 100 °C.

4. Composition adhésive thermofusible sensible à la pression selon l'une quelconque des revendications 1 ou 3 **caractérisée en ce que** le premier copolymère tribloc est un copolymère tribloc linéaire transparent à base de styrène et d'éthylène/butylène.

5. Composition adhésive thermofusible sensible à la pression selon la revendication 4 **caractérisée en ce que** le premier copolymère tribloc est un élastomère styrène-éthylène-butylène-styrène (SEBS).

6. Composition adhésive thermofusible sensible à la pression selon l'une quelconque des revendications 1 à 5 **caractérisée en ce que** le deuxième copolymère tribloc est un copolymère transparent à base de styrène et d'éthylène/propylène.

7. Composition adhésive thermofusible sensible à la pression selon la revendication 6 **caractérisée en ce que** le deuxième copolymère tribloc est un élastomère styrène-éthylène-propylène-styrène (SEPS).

8. Composition adhésive thermofusible sensible à la pression selon l'une quelconque des revendications 1 à 7 **caractérisée en ce que** la résine tackifiante est une résine thermoplastique totalement hydrogénée de poids moléculaire faible.

9. Composition adhésive thermofusible sensible à la pression selon l'une quelconque des revendications 1 à 8 **caractérisée en ce que** le plastifiant est une huile minérale paraffinique ou naphténique sans composé aromatique, non stabilisée.

10. Composition adhésive thermofusible sensible à la pression selon l'une quelconque des revendications 1 à 9 **caractérisée en ce qu'**elle comprend en outre de 0,1 à 5 % en poids d'au moins un antioxydant.

11. Composition adhésive thermofusible sensible à la pression selon la revendication 10 **caractérisée en ce que** l'antioxydant est choisi dans le groupe consistant en antioxydant de phosphite, antioxydant de phosphonite, antioxydant de thioéther, antioxydant phénolique ou des mélanges de ceux-ci.

12. Article comprenant un substrat revêtu avec la composition adhésive thermofusible sensible à la pression selon les revendications 1 à 11.

13. Article selon la revendication 12 **caractérisé en ce que** la masse totale d'adhésif est dans la plage d'environ 5 g/m² à 500 g/m².

14. Utilisation d'une composition adhésive thermofusible sensible à la pression selon les revendications 1 à 11 pour une adhérence sur la peau.
